# EUROPEAN PATENT APPLICATION

(11) **EP 1 626 401 A1**
(43) Date of publication of application: **15.02.2006**
(21) Application number: 04734392.6
(22) Date of filing: 21.05.2004
(51) Int. Cl.: G11B 11/105

(54) **ANNEALING DEVICE AND ANNEALING METHOD**

(30) Priority: 21.05.2003 JP 2003143872
(71) Applicant: SONY CORPORATION, Tokyo 141-0001 (JP)
(72) Inventor: FUJITA, Goro SONY CORPORATION, Tokyo 1410001 (JP); MIKI, Takeshi SONY CORPORATION, Tokyo 1410001 (JP); TANAKA, Yasuhito SONY CORPORATION, Tokyo 1410001 (JP); SAKAMOTO, Tetsuhiro SONY CORPORATION, Tokyo 1410001 (JP); FUJIIE, Kazuhiko SONY CORPORATION, Tokyo 1410001 (JP)
(74) Representative: Melzer, Wolfgang
(86) International application number: PCT/JP2004/007333
(87) International publication number: WO 2004/105015

(57) **Abstract**

The present invention is directed to an annealing apparatus adapted for performing anneal processing with respect to a magneto optical recording medium, which comprises a diffraction optical unit (3) for optically separating light beams emitted from a laser light source (1) into first light beams which are the 0 (zero)-th order diffracted light beams and second and third light beams which are the first order diffracted light beams, an object lens (5) for converging the first light beams to irradiate the first light beams thus converged onto magnetic layers of guide grooves or land portions forming both sides of the guide grooves, and for converging the second and third light beams to irradiate the second and third light beams thus converged onto magnetic layers in the vicinity of the boundary portions between guide grooves and land portions, and a biaxial actuator unit (6) for controlling the object lens (5) on the basis of linear characteristic of a first tracking error signal generated on the basis of intensity distribution of light quantities of rays of return light of the first light beams so that the first light beams follow the guide grooves or the land portions.

## Description

### Technical Field

The present invention relates to a magneto optical recording medium to which Magnetically induced Super Resolution (MSR) technology is applied, and more particularly to an annealing apparatus and an annealing method which are adapted for implementing anneal processing to a magneto optical recording medium to which Domain Wall Displacement Detection (DWDD) system is applied.

This Application claims priority of Japanese Patent Application No. 2003-143872, filed May 21, 2003, the entirety of which is incorporated by reference herein.

### Background Art

In magneto optical discs, Magnetically induced Super Resolution (MSR) technology for increasing recording density in a linear density direction is used, thereby making it possible to increase information recording capacity without being limited by spatial frequency of the reproduction optical system. Particularly, it is considered that the Domain Wall Displacement Detection (DWDD) system is a system capable of most effectively increasing recording density of the magnetic optical disc.

The magneto optical disc of the DWDD system comprises magnetic layers each composed of a recording layer, a switching layer and a reproduction layer. At the recording layer, there are recorded recording marks smaller than light beam spot diameter of reproduction light. In the room temperature state, recording marks of the recording layer are transferred to the reproduction layer through intermediate switching layer by exchange bonding force.

When light beam spot of reproduction light is irradiated onto tracks where information are recorded, magnetization is lost in the area having a temperature of Curie temperature or more of the switching layer. Thus, exchange bonding forces which have been exerted between respective layers are eliminated. When the exchange bonding forces have been eliminated, domain walls around magnetic domains forming the recording marks of the reproduction layer are moved so that small recording marks are enlarged. For this reason, recording marks can be reproduced by reproduction light.

In magneto optical discs of the DWDD system, laser anneal processing of magnetic body (material) beside tracks (lands) where information are to be recorded, i.e., guide grooves (grooves) is performed to remove perpendicular magnetic anisotropy to thereby allow the above-described domain wall to be moved to be only domain walls in a direction perpendicular to the land portions. When laser anneal processing is performed in this way, domain walls in a direction perpendicular to land portions can be freely moved in a track direction without change of energy because domain walls along the land portions do not exist as described in the Japanese Patent Application Laid Open No. 1994-290496 publication.

The laser anneal processing for removing the perpendicular magnetic anisotropy in the magneto optical disc is a very important process performed after film formation step at the process for manufacturing magneto optical disc.

Since the laser anneal processing as described above is not performed with respect to all magnetic layers of the magneto optical disc, but is implemented every one disc with respect to guide grooves, it takes much time.

Moreover, in the prior art, information are recorded only with respect to lands of the magnet optical disc. However, for the purpose of realizing larger capacity, land/groove recording system of recording information also with respect to guide grooves is used.

Accordingly, in magneto optical discs adapted for performing land/groove recording, portions where it is necessary to perform layer anneal processing to remove perpendicular magnetic anisotropy would result in only small areas in the vicinity of the boundary portions between lands serving as recording tracks and grooves. It is very difficult to precisely perform laser anneal processing with respect to such narrow area, and it takes much time in the manufacturing process.

### Disclosure of the Invention

An object of the present invention is to provide a novel annealing apparatus and a novel annealing method which can eliminate problems that prior arts have.

Another object of the present invention is to provide an annealing apparatus and an annealing method which can execute, precisely and in short time, a laser anneal processing for removing perpendicular magnetic anisotropy between recording tracks, which is performed at a process for manufacturing magneto optical disc.

The present invention is directed to an annealing apparatus adapted for annealing magnetic layers of a magneto optical recording medium, which comprises: a light source for emitting light beams having a predetermined wavelength; diffraction optical means for optically separating light beams emitted from the light source into first light beams which are the 0 (zero)-th order diffracted light beams and second and third light beams which are the first order diffracted light beams, wherein in the case where each of beam outputs of the second and third light beams is caused to be a beam output necessary in annealing the magnetic layers, the diffraction optical means serves to adjust light quantity ratio between the first light beams and the second and third light beams so that a beam output of the first light beams is equal to the beam output necessary in performing anneal processing or less to optically separate light beams thus obtained; irradiation means for converging the first light beams which have been optically separated at the diffraction optical means to irradiate the first light beams thus converged onto the magnetic layers of guide grooves or land portions forming both sides of the guide grooves which have been formed at the magneto optical recording medium, and for converging the second and third light beams to irradiate the second and third light beams which have been thus converged onto the magnetic layers in the vicinity of the boundary portions between the guide grooves and the land portions; first intensity distribution detecting means for detecting intensity distribution of light quantities of rays of return light of the first light beams which have been irradiated onto the magnetic layers of the guide grooves; first tracking error signal generating means for generating a first tracking error signal on the basis of the intensity distribution of light quantities of rays of return light of the first intensity light beams detected by the first detecting means; and control means for controlling the irradiation means on the basis of linear characteristic of the first tracking error signal generated by the first tracking error signal generating means in such a manner that the first light beams follow the guide grooves or the land portions.

In addition, the present invention is directed to an annealing method of annealing magnetic layers of a magneto optical recording medium; the annealing method comprising: optically separating light beams emitted from a light source into first light beams which are the 0 (zero)-th order diffracted light beams and second and third light beams which are the first order diffracted light beams to allow the light beams thus optically separated to be incident on irradiation means; allowing the irradiation means to converge the first light beams thus optically separated to irradiate the first light beams thus converged onto the magnetic layers of guide grooves or land portions forming both sides of the guide grooves which have been formed at the magneto optical recording medium; allowing the irradiation means to converge the second and third light beams which have been optically separated to irradiate the second and third light beams thus converged onto the magnetic layers in the vicinity of the boundary portions between the guide grooves and the land portions; detecting intensity distribution of light quantities of rays of return light of the first light beams irradiated onto the magnetic layers of the guide grooves; generating a first tracking error signal on the basis of the intensity distribution of light quantities of rays of return light of the first light beams thus detected; and controlling the irradiation means on the basis of linear characteristic of the generated first tracking error signal in such a manner that the first light beams follow the guide grooves or the land portions.

Still further objects of the present invention and the practical merits obtained by the present invention will become more apparent from the description of the embodiments which will be given below with reference to the attached drawings.

### Brief Description of the Drawings

FIG. 1 is a block diagram showing the configuration of a laser annealing apparatus according to the present invention.
FIG. 2 is a partial cross sectional view showing the structure of magneto optical disc to which laser anneal processing is implemented by the laser annealing apparatus.
FIG. 3 is a plan view showing grating that the laser annealing apparatus has.
FIG. 4 is a view showing beam spot of light beams irradiated from the laser annealing apparatus onto magneto optical disc.
FIG. 5 is a characteristic diagram showing light quantity ratio of light beams irradiated from the laser annealing apparatus onto the magneto optical disc.
FIG. 6 is a view for explaining beam spot diameter of the 0-th order diffracted light beams irradiated from the laser annealing apparatus onto magneto optical disc.
FIG. 7 is a plan view showing the state where laser anneal processing is performed with respect to magneto optical disc in which width of groove and width of land have the same percentages.
FIG. 8 is a plan view showing the state where laser anneal processing is performed with respect to magneto optical disc in which width of groove and width of land have different percentages.
FIG. 9 is a view used for explaining grating adjustment.

### Best Mode for Carrying Out the Invention

An annealing apparatus and an annealing method according to the present invention will now be described in detail with reference to the attached drawings.

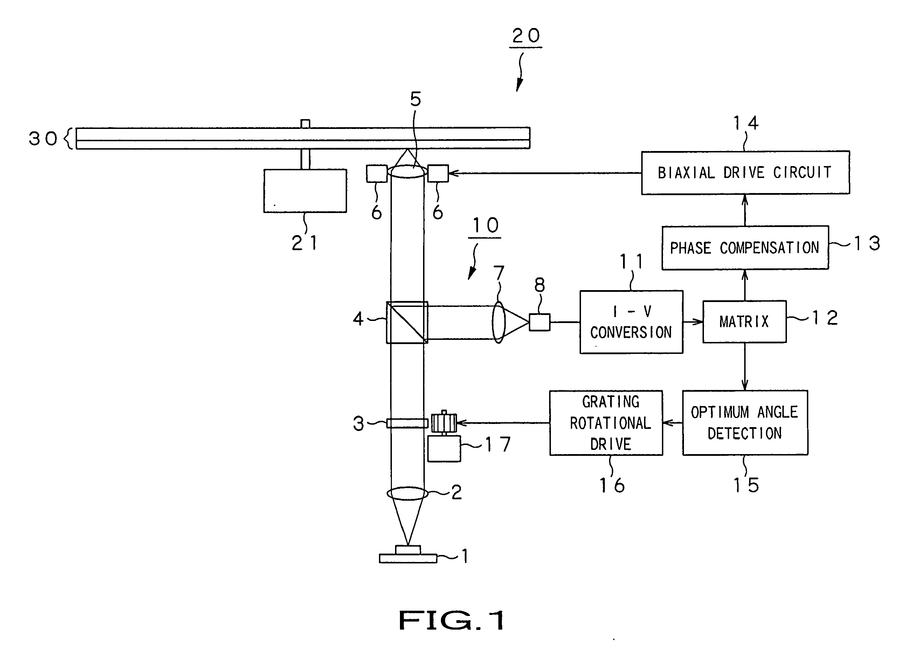

First, a laser annealing apparatus (laser annealer) 20 according to the present invention will be explained with reference to FIG. 1. The laser annealing apparatus 20 performs laser anneal processing of a predetermined area of a magneto optical disc 30 mounted on turn table (not shown) rotating in one body with a spindle motor 21.

Here, the magneto optical disc 30 to which laser anneal processing is implemented by the laser annealing apparatus 20 according to the present invention will be explained.

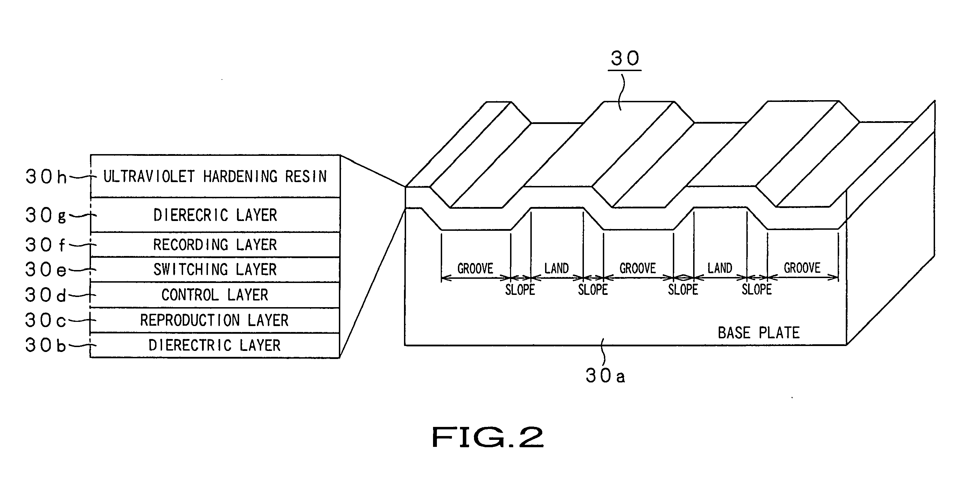

At the magneto optical disc 30, as shown in FIG. 2, on a base plate (substrate) 30a consisting of polycarbonate which has been injection-molded by using stamper where guide grooves (hereinafter referred to as grooves) are formed, there are formed, as film, a dielectric layer 30b, a reproduction layer 30c, a control layer 30d, a switching layer 30e, a recording layer 30f and a dielectric layer 30g after they undergo sputtering in order. Further, a ultraviolet hardening resin 30h is coated on the upper layer of the dielectric layer 30g.

Laser anneal processing by the laser annealing apparatus 20 is executed before the ultraviolet hardening resin 30h is coated.

At the magneto optical disc 30, for the purpose of increasing recording capacity, land/groove recording system of recording data also at grooves in addition to lands is applied. Accordingly, the area to which laser anneal processing is performed for the purpose of removing perpendicular magnetic anisotropy by the laser annealing apparatus 20 according to the present invention is small areas existing in the vicinity of the boundary portions between lands and grooves. In the following explanation, such small areas existing in the vicinity of the boundary portions between lands and grooves of the magneto optical disc 30 to which laser anneal processing is performed by the laser anneal apparatus 20 is called slope. In order to precisely perform laser anneal processing of the slopes of the magneto optical disc 30, the laser annealing apparatus 20 serves to execute tracking control along lands or grooves.

In the laser anneal processing by the laser annealing apparatus 20, light beams for laser anneal are irradiated from the dielectric layer 30g side opposite to the base plate 30a of the magneto optical disc 30. Accordingly, in mounting the magneto optical disc 30 on turn table (not shown) of the laser annealing apparatus 20, the magneto optical disc 30 is mounted in the state where the base plate 30a is caused to be top face.

The laser annealing apparatus 20 according to the present invention will be explained in practical sense with reference to FIG. 1. The laser annealing apparatus 20 comprises, in addition to turn table (not shown) and spindle motor 21, an optical pick-up 10 for generating light beams for tracking control and light beams for laser anneal through plural optical parts (components) from laser beams emitted from a laser light source 1 to irradiate those light beams onto the magneto optical disc 30.

Moreover, the laser annealing apparatus 20 comprises a tracking servo system for performing tracking control of the optical pick-up 10 on the basis of a tracking error signal detected from return light of light beams for tracking control which have been irradiated onto the magneto optical disc 30, and a grating adjustment system for adjusting angle of a grating 3 for optically separating laser beams emitted from the laser light source 1 into light beams for tracking control and light beams for laser anneal.

Initially, the optical pick-up 10 of the laser annealing apparatus 20 will be explained. The optical pick-up 10 comprises laser light source 1, a collimator lens 2, grating 3, a beam splitter 4, an object lens 5, a biaxial actuator unit 6, a converging lens 7, and a photo-detector 8.

The laser light source 1 generates (oscillates) laser beams having a predetermined wavelength to emit the laser beams thus generated to the collimator lens 2 of the succeeding stage.

Since it is required that light beams for laser anneal irradiated from the optical pick-up 10 onto the magneto optical disc 30 are irradiated onto very small areas as compared to lands and/or grooves where information are to be recorded, it is necessary that the spot diameter of light beams irradiated onto the magneto optical disc 30 is smaller than the spot diameter of light beams irradiated onto the magneto optical disc 30 in performing recording/reproduction. Accordingly, when wavelength of laser beams used for performing recording/reproduction of information signal with respect to the magneto optical disc 30 is assumed to be 650 nm, the laser light source 1 is assumed to generate (oscillate) laser beams having a wavelength shorter than that of laser beams used in recording/reproduction of about 405 nm, for example.

The collimator lens 2 is disposed at the succeeding stage of the laser light source 1, and serves to allow laser beams emitted from the laser light source 1 to be parallel light beams having a predetermined beam diameter to emit the parallel light beams thus obtained to the grating 3.

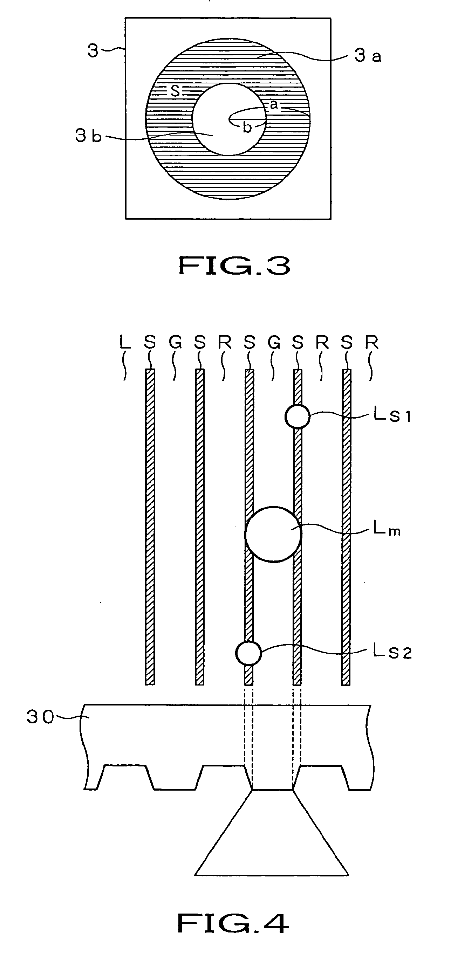

The grating 3 is a diffraction grating for optically separating light beams emitted from the collimator lens 2 into three light beams. As shown in FIG. 3, the grating 3 is a diffraction grating in which the area S obtained by removing circle 3b having radius b which is concentric circle from circle 3a having radius a is caused to be of the grating structure. The area of the circle 3a of the grating 3 is transparent, and is adapted so that a portion of light beams emitted from the collimator lens 2 is transmitted therethrough.

Light beams emitted from the collimator lens 2 onto such grating 3 are optically separated into one 0-th order diffracted light beams and two first order diffracted light beams. The 0-th order diffracted light beams thus optically separated are light beams irradiated onto lands R or grooves G of the magneto optical disc 30 and used for tracking control (hereinafter referred to as main light beams Lm). On the other hand, two first order diffracted light beams thus optically separated are light beams irradiated onto slopes S of the magneto optical disc 30 and used for laser anneal processing (hereinafter referred to as first sub light beams Ls1 and second sub light beams Ls2).

The main light beams, the first sub light beams and the second sub light beams which have been optically separated by the grating 3 are irradiated onto the magneto optical disc 30 through converging lens 7 which will be described later as shown in FIG. 4.

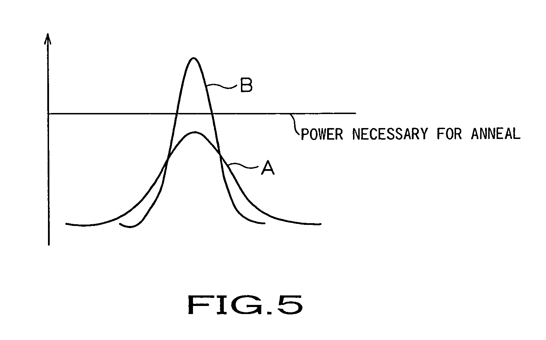

The relationship of light quantity between main light beams Lm and first and second sub light beams Ls1, Ls2 is shown in FIG. 5. A in FIG. 5 indicates intensity distribution of light quantity of the main light beams Lm, and B indicates intensity distribution of light quantities of first and second sub light beams Ls1, Ls2. The light quantity ratio between the main light beams Lm and the first and second sub light beams Ls1, Ls2 is light quantity ratio such that when laser power is set so that there results light quantity sufficient for allowing first and second sub light beams Ls1, Ls2 to perform laser anneal processing, light quantity of the main light beams Lm is not above such light quantity. Since the light quantity ratio between the main light beams Lm and the first and second sub light beams Ls1, Ls2 is determined by depth of grating groove of the diffraction grating portion of the grating 3, depth of the grating groove is designated at the grating 3 so that there results the above-described light quantity ratio.

Then, beam spot determines of the main light beams Lm, first sub light beam Ls1 and second sub light beam Ls2 will be explained. As shown in FIG. 4, the beam spot diameter of the main light beams Lm is large as compared to the beam spot diameters of the first and second sub light beams Ls1, ls2.

As described above, since spot of the magneto optical disc 30 to which laser anneal processing is implemented by the laser annealing apparatus 20 is very narrow area as compared to lands R or grooves G, wavelength of laser beams emitted from the laser light source 1 is caused to be shorter than wavelength of laser beams used for recording/reproduction in order to reduce beam spot of light beams to be irradiated. Moreover, as described later, also with respect to NA of the object lens, lens having NA higher than that of object lens used in optical pick-up for recording/reproduction is used for the same reason. Thus, each of beam spot diameter of the first and second sub light beams optically separated by the grating 3 results in a size such that laser anneal processing is not performed over the areas of slopes of the magneto optical disc 30.

However, when main light beams Lm of light beams optically separated by the grating 3 are caused to have the same beam spot diameter as the beam spot diameter of the first and second sub light beams Ls1, Ls2, higher harmonic component would take place in push-pull signal which is tracking error signal. As a result, linearity of tracking error signal cannot be maintained at the center of recording track which is control target position. It is to be noted that, in this case, the center of recording track results in central position of land and groove because of land/groove recording.

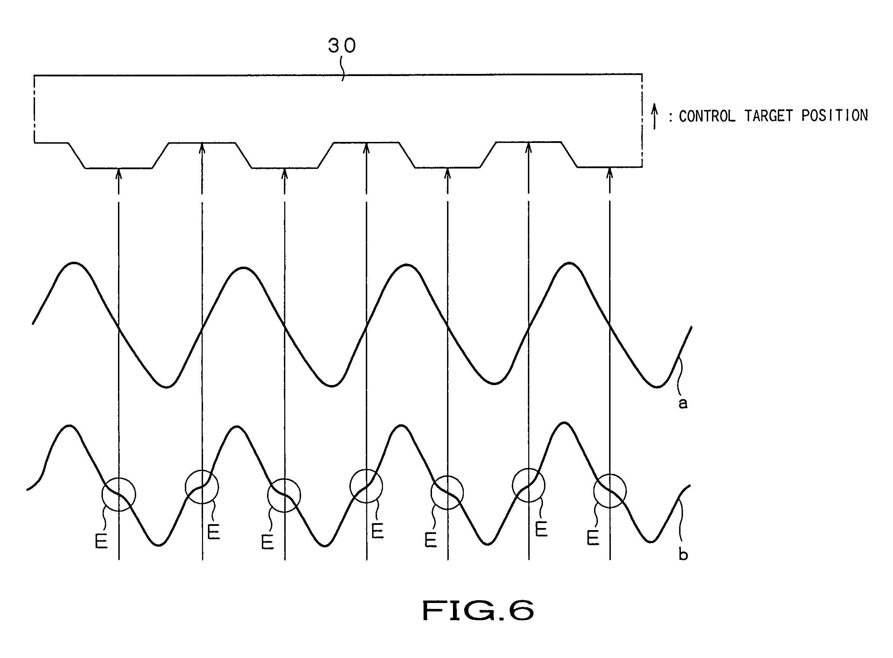

Ideal tracking error signal is indicated at a in FIG. 6, and tracking error signal acquired in the case where the beam spot diameter of the main light beams Lm is caused to be the same beam spot diameter as those of first and second sub light beams Ls1, Ls2 is indicated at b. As indicated by b in FIG. 6, in the vicinity of the center of recording track which is control target position of the tracking error signal, saddle portions E take place so that linearity is lost. In such a tracking error signal, it is impossible to precisely apply tracking servo. In view of the above, in order to obtain a tracking error signal having linearity at the control target position as indicated by a in FIG. 6, beam spot diameter of main light beams is caused to be greater than beam spot diameters of first and second sub light beams Ls1, Ls2 in conformity with width of land or groove.

Since the beam spot diameter of the main light beams Lm can be adjusted by radius b of circle 3b of the grating 3 shown in FIG. 3, adjustment is performed at the stage for designing the grating 3.

The main light beam Lm and the first and second sub light beams Ls1, Ls2 which have been optically separated at the grating 3 are incident on the beam splitter 4.

Returning to the FIG. 1 for a second time, explanation of the optical pick-up 10 is continued. The beam splitter 4 is disposed at the succeeding stage of the grating 3, and serves to allow main light beams Lm and first and second light beams Ls1, Ls2 emitted from the grating 3 to be transmitted theretrough to allow the transmitted light beams thus obtained to be incident on the object lens 5. In addition, the beam splitter 4 serves to respectively reflect, toward the converging lens 7, rays of return light of the main light beams Lm and the first and second sub light beams Ls1, Ls2 which have been emitted through the object lens 5 to the magneto optical disc 30.

The object lens 5 serves to respectively converge the main light beams Lm and the first and second sub light beams Ls1, Ls2 which have been transmitted at the beam splitter 4 to irradiate the light beams thus converged to the magneto optical disc 30. Moreover, drive displacement of the object lens 5 is performed in the tracking direction and in the focus direction by the biaxial actuator unit 6.

The converging lens 7 serves to respectively converge, onto the photo-detector 8, rays of return light of main light beams Lm and first and second sub light beams Ls1, Ls2 which have been reflected at the beam splitter 4 through the object lens 5. For the above-described reason, NA of the object lens 5 is caused to be higher than NA of the converging lens used in the optical pick-up adapted for emitting light beams for recording/reproduction. NA of the object lens 5 is expressed as, e.g., NA = 0.85.

The photo-detector 8 is photoelectric converting element, and serves to receive rays of return light of the main light beams Lm, return light of the first sub light beams Ls1 and return light of the second sub light beams Ls2 which have been respectively converged by the converging lens 7 to detect intensity distributions of light quantities as current values. The photo-detector 8 is comprised of, e.g., three quadrisected detectors for respectively detecting intensity distributions of light quantities of return light of the main light beam Lm, return light of the first sub light beam Ls1 and return light of the second sub light beams Ls2.

The photo-detector 8 serves to calculate a main push-pull signal from the intensity distribution of light quantities of rays of return light of main light beams Lm which have been detected at the quadrisected detector, and to calculate a first sub push-pull signal and a second sub push-pull signal from the intensity distributions of light quantities of rays of return light of the first and second sub light beams which have been respectively detected at the quadrisected detector.

The main push-pull signal, the first sub push-pull signal and the second push-pull signal which have been calculated at the photo-detector 8 are delivered to tracking servo system which will be described later. Particularly, the main push-pull signal is used as a tracking error signal in the tracking control.

Subsequently, the tracking servo system which performs tracking control of the above-described optical pick-up 10 will be explained.

The tracking servo system comprises a current·voltage (I-V) converting unit 11, a matrix 12, a phase compensation circuit 13, and a biaxial actuator drive circuit 14.

The current voltage (I-V) converting unit 11 converts a main push-pull signal, and first and second sub push-pull signals which are delivered from the photo-detector 8 into voltage values to deliver them to the matrix 12.

The matrix 12 respectively delivers the main push-pull signal and the first and second sub push-pull signals which have been delivered from the current·voltage (I-V) converting unit 11 to the phase compensation circuit 13 and optimum angle detecting unit 15 of grating adjustment system which will be described later.

The phase compensation circuit 13 is a circuit adapted for improving delay of phase in the tracking servo system, and serves to lead phase of voltage value of a main push-pull signal delivered from the matrix 12 to deliver the voltage value thus obtained to the biaxial actuator drive circuit 14.

The biaxial actuator drive circuit 14 delivers, to the biaxial actuator unit 6, voltage value of the phase-compensated main push-pull signal delivered from the phase compensation circuit 13 to drive the biaxial actuator 6.

Such laser annealing apparatus 20 performs tracking control of the object lens 5 of the optical pick-up 10 in a track direction by the tracking servo system on the basis of main push-pull signal detected from return light of main light beams Lm which have been irradiated from the optical pick-up 10 onto grooves G or lands R of the magneto optical disc 30, thereby making it possible to respectively precisely irradiate first sub light beams Ls1 and second sub light beams Ls2 which have been optically separated at the grating 3 onto slopes S of the magneto optical disc 30.

Subsequently, the grating adjustment system will be explained. The grating adjustment system comprises an optimum angle detecting unit 15, a grating rotational drive unit 16 and a motor 17, and serves to rotate the grating 3, with the optical axis of laser beams emitted from the laser light source 1 toward the grating 3 being as center of rotation, on the basis of first and second sub push-pull signals which are delivered from the matrix 12 to change setting of irradiation position onto the magneto optical disc 30 of the first and second sub light beams Ls1 and Ls2 which have been optically separated by the grating 3.

First, the reason why setting of the irradiation position onto the magneto optical disc 30 of the first and second sub light beams Ls 1 and Ls2 is changed by the grating adjustment system will be explained.

It is not limited that the width of grooves G formed at the magneto optical disc 30 is exactly the same as the width of 1ands R formed as the result of the fact that grooves G are formed.

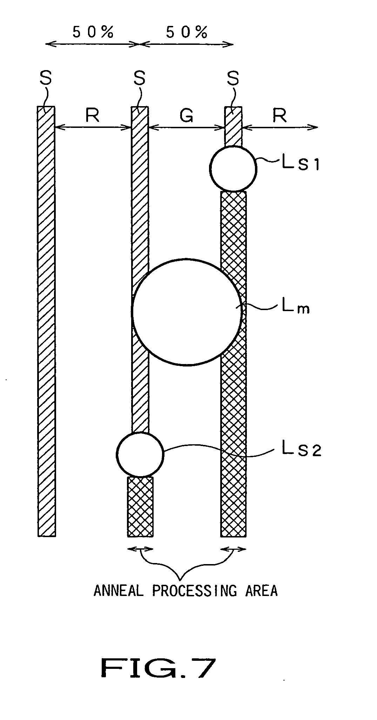

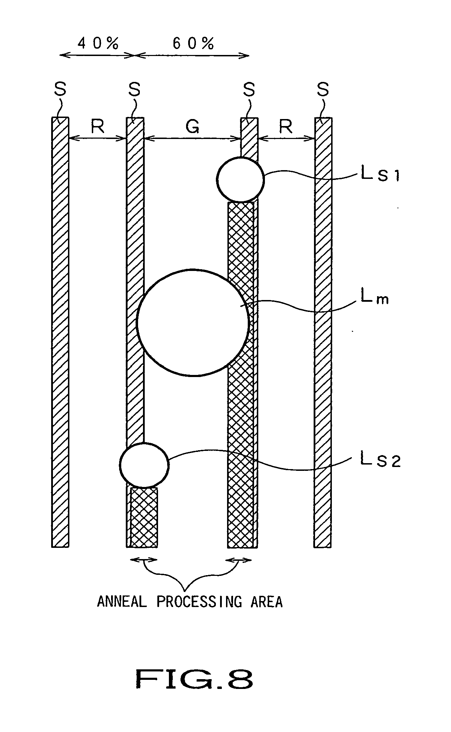

For example, as shown in FIG. 7, the width of grooves G and the width of 1and R which are formed at the magneto optical disc 30 may be 1 : 1 (duty ratio 50% : 50%). As shown in Fig. 8, width of groove and width of lands may be 3 : 2 (duty ratio 60% : 40%). As stated above, width of grooves G and width of lands R are varied by the magneto optical disc 30 to be manufactured.

It is assumed that in the case where the width of grooves G and the width of lands R substantially have the relationship of 1 : 1 as shown in FIG. 7, the laser annealing apparatus 20 could have precisely performed laser anneal processing of slopes S which are the boundary portions between grooves G and lands R of the magneto optical disc 30 by the first and second sub light beams Ls1 and Ls2 which have been optically separated by the grating 3.

At this time, in the case where laser anneal processing of magneto optical disc 30 in which width of grooves G and width of lands R substantially have the relationship of 3 : 2 as shown in FIG. 8 is performed without changing setting of the laser annealing apparatus 20, laser anneal processing would be performed on grooves G in the state where the first and second sub light beams Ls 1 and Ls2 which have been optically separated by the grating 3 are not irradiated onto slopes S.

In the case where width of grooves G and width of lands R which are formed at the magneto optical disc 30 have different percentages as stated above, adjustment can be made by rotating the grating 3 with the optical axis being as the center.

It is assumed that in the case where, e.g., ratio between width of grooves G and width of lands R of the magneto optical disc is 1 : 1 as described above, grating 3 is set so that first and second sub light beams Ls1, Ls2 are irradiated onto slopes S. In order that first and second light beams Ls1 and Ls2 are irradiated onto slopes S of magneto optical disc 30 such that ratio between width of grooves G and width of lands R is 3 : 2 in the case where the grating 3 of the laser annealing apparatus 20 is set in this way, the grating 3 is rotated by a predetermined angle with the optical axis being as center to make setting for a second time, thereby making it possible to solve this problem.

In concrete terms, the grating adjustment system determines, by the optimum angle detecting unit 15, an angle of the grating 3 to be rotated with the optical axis being as the center by making reference to first and second sub push-pull signals which are delivered from the matrix 12 to perform, by the grating rotational drive unit 16, drive control of the motor 17 in accordance with an optimum angle detected at the optimum angle detecting unit 15 to optimize the angle of the grating 3.

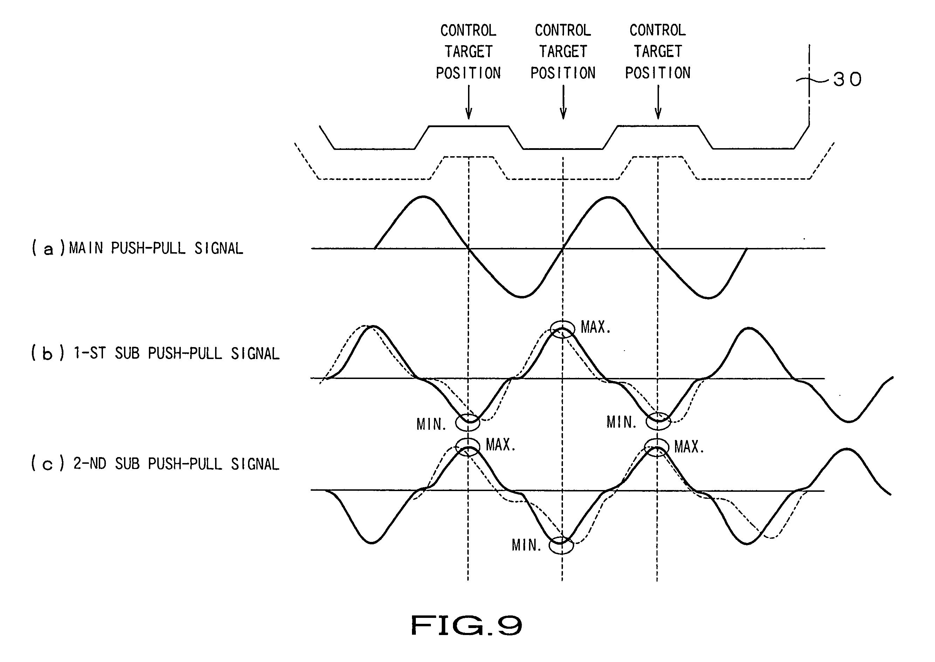

A main push-pull signal, a first sub push-pull signal and a second sub push-pull signal which have been acquired from the magneto optical disc 30 where width of grooves G and width of lands R have the same percentages are respectively indicated by solid lines at (a), (b) and (c) in FIG. 9. Moreover, a first sub push-pull signal and a second sub push-pull signal which have been acquired from the magneto optical disc 30 where width of grooves G and width of lands R have different percentages are respectively indicated by dotted lines at (b) and (c) in FIG. 9.

As indicated by solid lines at (b) and (c) in FIG. 9, the first sub push-pull signal and the second sub push-pull signal indicate maximum value and minimum value at control target position in the tracking control, i.e., at central positions of grooves and lands. Moreover, it is understood that since the angle of the grating 3 of the laser annealing apparatus 20 is not optimally adjusted, the maximum value and the minimum value of the first and second sub push-pull signals are shifted from the central positions of grooves G and lands R as indicated by dotted lines at (b) and (c) in FIG. 9.

Accordingly, the optimum angle detecting unit 15 serves to rotate the grating 3 with reference to first and second sub push-pull signals which are delivered from the matrix 12 so that there result maximum value and minimum value at central positions of grooves G and lands R to determine an optimum angle.

As described above, in the laser annealing apparatus 20, since irradiation positions of first and second sub light beams Ls1 and Ls2 which are light beams for performing laser anneal processing can be adjusted by the grating adjustment system, it is possible to irradiate first and second sub light beams Ls1 and Ls2 onto portions except for slopes S of the magneto optical disc 30.

For example, in the case where there is the possibility that laser anneal processing is performed to a little degree not only with respect to slopes S of the magneto optical disc 30 but also with respect to grooves G and lands R thereof so that the characteristic of the magneto optical disc 30 may be improved, etc., adjustment is made by the grating adjustment system by rotating the grating 3 with the optical axis being as center by making reference to the maximum value and the minimum value of first and second push-pull signals, thereby making it possible to cope with such situation.

The adjustment of the grating 3 by the grating adjustment system is an operation first performed in conducting laser anneal processing in the laser annealing apparatus 20. Since the ratio between width of groove G and width of land R of the magneto optical disc 30 is determined by stamper, angular adjustment of the grating 3 by the grating adjustment system is executed only in the case where stamper is changed in the manufacturing process for the magneto optical disc 30.

It is to be noted that the present invention has been described in accordance with preferred embodiments thereof illustrated in the accompanying drawings and described in detail, it should be understood by those ordinarily skilled in the art that the invention is not limited to embodiments, but various modifications, alternative constructions or equivalents can be implemented without departing from the scope and spirit of the present invention as set forth by appended claims.

### Industrial Applicability

As described above, in the present invention, optically separated 0-th order diffracted light beams are caused to be light beams for tracking control, and two first order diffracted light beams are caused to be light beams for anneal processing to generate a tracking error signal from return light of the 0-th diffracted light beams irradiated onto the magneto optical recording medium to perform a tracking control so as to follow guide grooves or land portions of the magneto optical recording medium. By performing tracking control so as to follow guide grooves or land portions, two first order diffracted light beams which have been optically separated at the diffraction optical means are irradiated onto magnetic layers in the vicinity of the boundary portions between guide grooves and land portions of the magnetic optical recording medium. Thus, anneal processing is performed.

Thus, since anneal processing of a desired area can be simultaneously performed by two light beams for laser anneal while performing tracking control, it is possible to perform precise and high speed anneal processing. Accordingly, the manufacturing process for magneto optical recording medium is shortened. For this reason, it becomes possible to provide, at low cost, magneto optical recording media having very large recording capacity.

In addition, since the diffraction grating is rotated with optical axis of light beams incident from the light source onto the diffraction optical means being as center of rotation so that irradiation positions of second and third light beams irradiated onto the magneto optical recording medium can be changed, it becomes possible to precisely perform anneal processing irrespective of what value ratio between guide grooves and land portions has.

## Claims

1. An annealing apparatus adapted for annealing magnetic layers of a magneto optical recording medium,
the annealing apparatus comprising:
a light source for emitting light beams having a predetermined wavelength;
diffraction optical means for optically separating light beams emitted from the light source into first light beams which are the 0 (zero)-th order diffracted light beams and second and third light beams which are the first order diffracted light beams, wherein in the case where each of beam outputs of the second and third light beams is caused to be a beam output necessary in annealing the magnetic layers, the diffraction optical means serves to adjust light quantity ratio between the first light beams and the second and third light beams so that a beam output of the first light beams is equal to the beam output necessary in performing anneal processing or less to optically separate the light beams thus obtained;
irradiation means for converging the first light beams which have been optically separated at the diffraction optical means to irradiate the first light beams thus converged onto the magnetic layers of guide grooves or land portions forming both sides of the guide grooves which have been formed at the magneto optical recording medium, and for converging the second and third light beams to irradiate the second and third light beams which have been thus converged onto the magnetic layers in the vicinity of the boundary portions between the guide groove and the land portion;
first intensity distribution detecting means for detecting intensity distribution of light quantities of rays of return light of the first light beams which have been irradiated onto the magnetic layers of the guide grooves;
first tracking error signal generating means for generating a first tracking error signal on the basis of the intensity distribution of light quantities of rays of return light of the first light beams detected by the first intensity distribution detecting means; and
control means for controlling the irradiation means on the basis of linear characteristic of the first tracking error signal generated by the first tracking error signal generating means in such a manner that the first light beams follow the guide grooves or the land portions.

2. The annealing apparatus as set forth in claim 1,
wherein beam diameter of the first light beams optically separated at the diffraction optical means is such a size to maintain linearity of a tracking error signal generated by the tracking error signal generating means.

3. The annealing apparatus as set forth in claim 2,
wherein each of beam diameters of the second and third light beams is smaller than beam diameter of the first light beams.

4. The annealing apparatus as set forth in claim 1, further comprising:
second intensity distribution detecting means for respectively detecting intensity distributions of light quantities of rays of return light of the second and third light beams.

5. The annealing apparatus as set forth in claim 4, further comprising:
second tracking error signal generating means for generating a second tracking error signal and a third tracking error signal on the basis of intensity distributions of light quantities of rays of the second and third light beams which have been detected by the second intensity distribution detecting means.

6. The annealing apparatus as set forth in claim 5, further comprising:
rotation means for rotating the diffraction optical means with optical axis of the light beams emitted from the light source to the diffraction optical means being as center of rotation.

7. The annealing apparatus as set forth in claim 1, comprising:
irradiation position determination means for determining irradiation positions onto the magneto optical recording medium of the second and third light beams when the irradiation means follows the guide grooves or the land portions in accordance with control by control means based on linear characteristic of the first tracking error signal by making reference to respective maximum and minimum values of the second and third tracking error signals changed by an angle when the diffraction optical means is rotated by the rotation means.

8. An annealing method of annealing magnetic layers of a magneto optical recording medium,
the annealing method comprising:
optically separating light beams emitted from a light source into first light beams which are the 0 (zero)-th order diffracted light beams and second and third light beams which are the first order diffracted light beams to allow the light beams thus optically separated to be incident on irradiation means;
allowing the irradiation means to converge the first light beams thus optically separated to irradiate the first light beams thus converged onto the magnetic layers of guide grooves or land portions forming both sides of the guide grooves which have been formed at the magneto optical recording medium;
allowing the irradiation means to converge the second and third light beams which have been optically separated to irradiate the second and third light beams thus converged onto the magnetic layers in the vicinity of the boundary portions between the guide grooves and the land portions;
detecting intensity distribution of light quantities of rays of return light of the first light beams irradiated onto the magnetic layers of the guide grooves;
generating a first tracking error signal on the basis of the intensity distribution of light quantities of rays of return light of the first light beams thus detected; and
controlling the irradiation means on the basis of linear characteristic of the generated first tracking error signal in such a manner that the first light beams follow the guide grooves or the land portions.

9. The annealing method as set forth in claim 8,
wherein beam diameter of the optically separated first light beams is such a size to maintain linearity of the tracking error signal.

10. The annealing method as set forth in claim 9,
wherein each of beam diameters of the second and third light beams is smaller than beam diameter of the first light beams.

11. The annealing method as set forth in claim 8, further comprising:
detecting intensity distribution of light quantities of rays of return light of the second and third light beams.

12. The annealing method as set forth in claim 11, further comprising:
generating a second tracking error signal and a third tracking error signal on the basis of intensity distributions of light quantities of rays of return light of the second and third light beams.

13. The annealing method as set forth in claim 12,
wherein the light beams which are emitted from the light source and are optically separated and emitted of the first, second and third light beams are rotated with the optical axis thereof being as center of rotation.

14. The annealing method as set forth in claim 13, comprising:
determining irradiation positions onto the magneto optical recording medium of the second and third light beams when the irradiation means follows the guide grooves or the land portions in accordance with control based on linear characteristic of the first tracking error signal by making reference to respective maximum and minimum values of the second and third tracking error signals changed in accordance with an angle when diffraction optical means is rotated by rotation of the light beams.
